# EUROPÄISCHE PATENTANMELDUNG

(11) **EP 3 121 618 A1**
(43) Veröffentlichungstag der Anmeldung: **25.01.2017**
(21) Anmeldenummer: 15177886.7
(22) Anmeldetag: 22.07.2015
(51) Int. Cl.: G01S 5/14, G06Q 30/00

(54) **EINRICHTUNG ZUR ZUORDNUNG DER POSITION EINES MOBILEN GERÄTS**

(71) Anmelder: Edtmayer, Lorenz, 83395 Freilassing (DE); Grassberger, Roland, 1190 Wien (AT); Korte, Alexander, 1060 Wien (AT); Nimmervoll, Maximilian, 1190 Wien (AT)
(72) Erfinder: Edtmayer, Lorenz, 83395 Freilassing (DE); Grassberger, Roland, 1190 Wien (AT); Korte, Alexander, 1060 Wien (AT); Nimmervoll, Maximilian, 1190 Wien (AT)
(74) Vertreter: Sonn & Partner Patentanwälte

(57) **Zusammenfassung**

Einrichtung zur Zuordnung der Position eines mobilen Geräts (6) in einem Verkaufsraum (1) zu im Verkaufsraum (1) befindlichen Waren, umfassend eine Geräte-Positionserfassungsvorrichtung zur Feststellung der relativen Position des mobilen Geräts (6) im Verkaufsraum (1) zu im Verkaufsraum (1) befindlichen Funksignalsendern (3,4,5) und durch eine Vergleichsvorrichtung zum Vergleich der festgestellten relativen Position des mobilen Geräts (6) mit relativ zu den Funksignalsendern (3,4,5) festgestellten Waren-Positionen im Verkaufsraum (1).

## Beschreibung

Die Erfindung betrifft eine Einrichtung sowie ein Verfahren zur Zuordnung der Position eines mobilen Geräts in einem Verkaufsraum zu im Verkaufsraum befindlichen Waren.

Derzeit werden in der Praxis die Daten von Waren, für die sich Personen interessieren, hauptsächlich im Internet durch geeignete Methoden in Relation zu Personen gebracht und in anderen Systemen, wie z.B. Werbeplattformen, genutzt, um z.B. nachfolgend personalisierte Werbung für diese Produkte auf EDV-Systemen dieser Personen (z.B. persönliche Computer, Tablet-PCs oder Mobiltelefone) anzuzeigen. Die Herstellung ähnlicher Relationen von Waren zu Personen in physischen Verkaufsräumen wird in der Praxis durch die direkte Zuordnung eines elektronischen Funksenders zu einer bestimmten Ware bzw. einer Warengruppe erreicht. Dabei wird eine 1:1-Relation des Funksenders zu der jeweiligen Ware bzw. einer Warengruppe in einem EDV-System gespeichert und über eine auf einem mobilen Gerät installierte Software festgestellt, sobald die eindeutige Identifikation des Funksenders von dem mobilen Gerät empfangen werden kann.

Aus der US 8 396 485 B2 ist andererseits eine Technik bekannt, gemäß der dann, wenn ein mobiles Gerät in einen bestimmten vorgegebenen örtlichen Bereich gelangt, eine bestimmte Aktion seitens des mobilen Geräts ausgelöst wird, wie etwa ein vorgegebener Anruf im Fall des Eintritts in eine vorgegebene Zone. Dabei wird die Feststellung des Eintritts des mobilen Geräts in die Zone mit Hilfe von herkömmlichen Ortungstechniken für Mobiltelefone festgestellt.

Bevor nun die Zuordnung von Waren zu Personen näher erläutert und dabei insbesondere die erfindungsgemäße Technik beschrieben wird, ist es zweckmäßig, einige Begriffsdefinitionen voranzustellen.

### Begriffsdefinition

- iBeacon: Ein Beispiel für einen Funksender, der in einem Verkaufsraum fix montiert ist und ein Funksignal mit einem eindeutigen Identifikationscode sendet; dieses Funksignal kann von mobilen Geräten in einem begrenzten Umfeld (üblicherweise maximal 30 Meter) um den Funksender empfangen und weiterverarbeitet werden. In der vorliegenden Beschreibung wird auch der Begriff "iBeacon" für das gleichnamige Produkt der Firma Apple Inc. verwendet, welches einen Funksender mit eindeutigem Funksignal verwendet; das iBeacon kann aber auch durch eine andere Funktechnologie substituiert werden.
- Serversystem: Ein oder mehrere Computersysteme, die die einkommenden Warenpositionen zur Weiterverarbeitung speichern; die eingehenden Positionsdaten von Personen empfangen, berechnen, welche Waren sich in der Nähe der Personen befinden, und die sich daraus ergebende Relationsinformation Ware-Person (Person indirekt identifiziert über das mobile Gerät) an andere EDV-Systeme zur Nutzung weiterleiten..
- Mobiles Gerät: Mobiles technisches Gerät, das Daten über das öffentliche Mobilfunknetz übermitteln, Funksignale von Funksendern empfangen; und Softwareprogramme verarbeiten kann; mobile Geräte sind im allgemeinen intelligente Mobiltelefone/Smartphones und Tabletcomputer.
- Positionscode: Code einer relativen Position, der die eindeutigen Identifikationscodes der empfangenen Funksender und Triangulationsdaten oder Trilaterationsdaten zwischen diesen Funksendern beinhaltet; der Positionscode kann anhand des eindeutigen Identifikationscodes jedes der in ihm enthaltenen Funksender gefunden werden.

Es ist ein Ziel der vorliegenden Erfindung, eine Zuordnung von mobilen Geräten zu Waren in einem Verkaufsraum auf einfache Weise zu ermöglichen und so festzustellen, für welche Waren seitens des Halters des mobilen Geräts ein besonderes Interesse besteht; in der Folge sollen erhaltene Daten an EDV-Systeme zwecks Weiterverarbeitung, z.B. zur Zustellung von personalisierter Werbung über die festgestellte Warenart an das mobile Gerät, weitergegeben werden.

Zur Lösung der gestellten Aufgabe sieht die Erfindung eine Einrichtung vor, die gekennzeichnet ist durch eine Geräte-Positionserfassungsvorrichtung zur Feststellung der Position des mobilen Geräts im Verkaufsraum und durch eine Vergleichsvorrichtung zum Vergleich der festgestellten Position des mobilen Geräts mit Waren-Positionen im Verkaufsraum. Dabei ist es insbesondere vorteilhaft, wenn die Geräte-Positionserfassungsvorrichtung mehrere an festen Positionen im Verkaufsraum befindliche Funksignal-Sender zum Ausstrahlen von eindeutigen Funksignalen, die von dem im Verkaufsraum vorhandenen mobilen Gerät empfangen werden, und Rechenmittel zur geometrischen Bestimmung, z.B. mittels Triangulationsalgorithmen, der Position des mobilen Geräts relativ zu den Funksignal-Sendern auf Basis der empfangenen Funksignale umfasst.

Dementsprechend sieht die Erfindung auch ein Verfahren wie eingangs erwähnt vor, wobei die Position des mobilen Geräts im Verkaufsraum auf der Basis von eindeutigen Funksignalen, z.B. iBeacons, ermittelt wird, die von im Verkaufsraum befindlichen Funksignal-Sendern ausgesendet werden, und wobei die so ermittelte Position des mobilen Geräts mit Positionen von im Verkaufsraum befindlichen Waren verglichen wird.

Gemäß der vorliegenden Technik erfolgt somit eine Zuordnung von mobilen Geräten zu bestimmten Waren aufgrund der Feststellung der relativen Position des jeweiligen mobilen Geräts zu Funksendern, die eindeutige Funksignale ausstrahlen, wobei durch Vergleich der relativen Position des jeweiligen mobilen Geräts zu relativen Positionen von Waren, wie sie in einer Warenpositionsdatenbank gespeichert sind, die jeweils interessierende - räumlich nahe - Ware festgestellt werden kann.

Diese Waren oder Warengruppen können in der Folge, wie nachfolgend noch erläutert werden wird, dadurch im gegebenen Zusammenhang weitergegeben werden, dass mit der Ware und mit dem - räumlich nahen - mobilen Gerät verbundene Daten an andere EDV-Systeme zum Zweck der Weiterverarbeitung übermittelt und z.B. zur Auswertung im Hinblick auf besonders interessierende Waren, oder aber zur Zustellung von personalisierter Werbung über die spezielle Ware an das betreffende Mobilgerät verwendet werden. Wesentlich für die vorliegende Technik ist somit die Ermittlung und Speicherung der Positionen von Waren und die Zuordnung von Personen zu Waren, die sich in räumlicher Nähe zueinander befinden; d.h. genauer von Geräte-Positionen zu Waren-Positionen. Dabei beruht die vorliegende Technik, anders als gemäß Stand der Technik, nicht auf der Feststellung von absoluten Geo-Koordinaten, also der tatsächlichen geografischen Position, sondern einfach auf einer relativen Positionsbestimmung zu Funksendern, beispielsweise iBeacons, die im Verkaufsraum fest angebracht sind.

Die Funksender sind somit fix installierte Sender, mit relativ geringer Reichweite, die ein Funksignal an ihre nähere Umgebung, und zwar mit einer eindeutigen Identifikation aussenden. Im Fall von iBeacons kann die Identifikation eine Kombination aus Universally Unique Identifier - UUID (180 Bit-Wert), Major (16 Bit-Wert)und Minor (16 Bit-Wert)enthalten.

Wenn die nachfolgende Beschreibung auf iBeacons bevorzugt Bezug nimmt, so kann doch jede andere geeignete Funktechnik mit eindeutiger Identifikation ebenso gut im Rahmen der vorliegenden Technik eingesetzt werden. Über die jeweilige eindeutige Identifikation sind die Funksender und in der Folge der jeweilige Verkaufsraum eindeutig identifizierbar, d.h. es ist auch eine Unterscheidung von Verkaufsräumen in verschiedensten Orten oder Läden auf diese Weise problemlos möglich. Von Vorteil ist es demgemäß, wenn eine Waren-Positionserfassungsvorrichtung mit einem mobilen Gerät, das eine Funksender-Empfangsfunktion sowie Rechenmittel aufweist, und mit mehreren Funksignal-Sendern an festen Positionen im Verkaufsraum vorgesehen ist, wobei die Rechenmittel eingerichtet sind, die Position des an einen Waren-Platz gehaltenen mobilen Geräts auf Basis von empfangenen Funksignalen, z.B. mittels Triangulationsalgorithmen, zu bestimmen.

Auch ist es erfindungsgemäß von Vorteil, wenn die Rechenmittel für die Bestimmung der Position des mobilen Geräts einfach in diesem mobilen Gerät selbst enthalten sind.

In der Regel werden im jeweiligen Verkaufsraum zumindest drei derartige Funksender montiert, wobei jedenfalls für das mobile Gerät eine Empfangsmöglichkeit für von drei Funksendern ausgesendete Funksignale gegeben sein soll. Auf diese Weise kann mit Hilfe von Triangulation oder aber auch Trilateration (wie nachstehend noch näher erläutert werden wird) bevorzugt vom mobilen Gerät selbst die eigene Position, mithilfe von im mobilen Gerät enthaltenen Rechenmitteln, berechnet werden. Hierfür kann ein bekannter Triangulationsalgorithmus oder Trilaterationsalgorithmus, wie nachstehend noch näher erläutert, angewendet werden. Das mobile Gerät ist demgemäß mit einer entsprechenden Software (z.B. in Form einer App oder eines App-Moduls) auszustatten, was als solches problemlos möglich ist. Von Bedeutung ist, wie erwähnt, dass für die vorliegenden Zwecke die relative Position des mobilen Geräts ausreichend ist, wobei diese relative Position des mobilen Geräts in Bezug auf die ebenfalls relativ zu den Funksendern bestimmte relative Position der Ware gesetzt wird. Es ist somit nicht erforderlich festzustellen, an welcher exakten geografischen Position sich das mobile Gerät oder aber die interessierende Ware befindet. Dieser Umstand, dass keine exakte Positionsbestimmung erforderlich ist, sondern die Relation über die Funksignale zu deren Funksendern ausreicht, ist von besonderer Bedeutung, wobei es auch in vorteilhafter Weise möglich ist, dass die Funksignale aufgrund von Produktions- oder Arbeitstoleranzen der Funksender nicht bei jedem Funksender mit derselben Stärke oder Qualität ausgestrahlt werden, ebenso wie sich Verfälschungen, wie etwa aufgrund von baulichen Gegebenheiten, nicht nachteilig auswirken. Insofern ist die vorliegende Technik mit der Positionsbestimmung des mobilen Geräts auf der Basis von Funksignalen von im Verkaufsraum fix montierten Funksendern äußerst robust.

Wenn bei der relativen Positionsberechnung die - eindeutigen - Identifikationscodes per Funksender mit verwertet werden, wird dadurch erreicht, dass die jeweilige relative Positionsbrechung weltweit eindeutig sein kann, da die relativen Positionen in verschiedenen Verkaufsräumen sich auf Funksender mit jeweils voneinander verschiedenen, eindeutigen Identifikationscodes beziehen, sodass letztlich die Identifikationscodes als Teil der berechnenden Position verwendet werden können.

Die Warenpositionen können im Vorhinein erfasst und gespeichert werden, wobei dies, etwa unter Zuordnung zu Regalpositionen sowie unter Verwendung von Barcodes etc., auch händisch geschehen kann. Ein besonderer Vorteil ist es jedoch, wenn einfach zu diesem Zweck eine Waren-Positionserfassungsvorrichtung mit einem mobilen Gerät eingesetzt wird, das eine Funksender-Empfangsfunktion sowie Rechenmittel aufweist, und wenn mehrere Funksignal-Sender an festen Positionen im Verkaufsraum angebracht sind, wobei die Rechenmittel eingerichtet sind, die Position des an einen Waren-Platz gehaltenen mobilen Geräts auf Basis von empfangenen Funksignalen, z.B. mittels Triangulationsalgorithmen, zu bestimmen und mit der ebenfalls über die Waren-Positionserfassungsvorrichtung erfasste Identifikation der Ware, z.B. über den EAN- oder GTIN-Code der Ware, zu verknüpfen. Zweckmäßigerweise sind in allen vorgenannten Fällen die Rechenmittel für die Bestimmung der Position des mobilen Geräts, auch zwecks Erfassung der Waren-Position, sowie Erfassung und Verknüpfung der Warenidentifikation in diesem mobilen Gerät selbst enthalten.

Wie erwähnt ist es alternativ auch vorgesehen, die Positionen der Waren über eine Zuordnung dieser Waren zu Regalpositionen festzulegen, wobei in diesem Fall Positionscodes für die Regalpositionen vorab, beispielsweise mittels eines mobilen Geräts wie erwähnt, erfasst und gespeichert werden können. Die Zuordnung der Warenidentifikation zu der Regalposition erfolgt in einem separaten Schritt, z.B. über eine Regalbewirtschaftungssoftware. Dabei kann die Warenidentifikation mit dem Positionscode der Regalposition verknüpft werden.

Von Vorteil ist es hier vielfach, wenn die Position des mobilen Geräts sofort nach ihrer Ermittlung an ein Serversystem übermittelt wird, in dem auch die Positionen der Waren im Verkaufsraum, gegebenenfalls durch die Waren-Speichervorrichtung, verfügbar sind.

Für die Speicherung der gemäß dem oben erwähnten Verfahren ermittelten Positionen der Waren im betreffenden Verkaufsraum ist somit zweckmäßig eine Speichervorrichtung vorgesehen, wobei die Vergleichsvorrichtung mit dieser Warenpositions-Speichervorrichtung verbunden ist, und so die jeweilige Position des mobilen Geräts, das von einer interessierten Person gehalten wird, mit den gespeicherten Warenpositionen zwecks Herausfindung der nächstliegenden Waren verglichen wird.

In einer besonders günstigen Ausführungsform sind die Warenpositions-Speichervorrichtung und die Vergleichsvorrichtung durch ein Serversystem realisiert.

Weiters ist es für viele Zwecke von besonderem Vorteil, wenn die Warenpositions-Speichervorrichtung zur Speicherung von zusätzlichen Waren-bezogenen Daten, wie z.B. von Warenidentifikationscodes, des Datums der Einordnung der Waren, einer Produktgruppe, von Herstellern, Preisen und dgl., eingerichtet ist.

Vorzugsweise ist eine Geräte-Positionsvergleichsvorrichtung vorgesehen, der Geräte-Positionsdaten von der Geräte-Positionserfassungsvorrichtung zugeführt werden. Im Fall eines Serversystems ist bevorzugt diese Gerätepositions-Vergleichsvorrichtung in diesem Serversystem eingerichtet. Die Positionsvergleichsvorrichtung ermittelt aufgrund der Gerätepositionsdaten und der in der Warenpositions-Speichervorrichtung gespeicherten Positionscodes der Waren die Warenidentifikation (und ggf. weitere Daten wie Produktgruppe oder Hersteller) der Waren, die sich in der Nähe der mobilen Gerätes befinden. Weiters ist es auch von Vorteil, wenn das Serversystem die so ermittelten Daten an weitere Softwaresysteme wie z.B. Ad-Server weiterleitet, die auf Basis der empfangenen Informationen auf den Halter des mobilen Gerätes individuell abgestimmte Werbe-Nachrichten an das jeweilige mobile Gerät des Halters senden.

Somit ist es bei der vorliegenden Technik in vorteilhafter Weise möglich, Daten im Hinblick auf eine gezielte Werbung zu verwenden, und demgemäß ist eine günstige Ausführungsform der vorliegenden Einrichtung gekennzeichnet durch zumindest ein weiteres EDV-System zum Empfang von Informationen, wie Mobilgeräte-Identifikation, Wareninformation usw., vom Serversystem und zu deren Weiterverarbeitung, z.B. für die Zusendung von personalisierter Werbung.

Wie erwähnt sind beispielsweise die Funksignal-Sender durch iBeacons gebildet.

Von besonderem Vorteil ist es erfindungsgemäß, wenn die Position des mobilen Geräts immer sofort nach ihrer Ermittlung an ein Serversystem übermittelt wird, dem auch die Positionen der Waren im Verkaufsraum, gegebenenfalls durch die Waren-Speichervorrichtung, verfügbar sind.

Andererseits ist es aber, etwa um eine gesammelte, paketweise Übermittlung von Daten an das Serversystem zu ermöglichen, auch günstig, wenn die Position des mobilen Geräts nach ihrer Ermittlung vorübergehend im mobilen Gerät gespeichert und zu einem späteren Zeitpunkt an ein Serversystem übermittelt wird, dem auch die Positionen der Waren im Verkaufsraum, gegebenenfalls durch die Waren-Speichervorrichtung, verfügbar sind.

Vorzugsweise wird die Postion des mobilen Geräts an das Serversystem über ein Mobilfunknetz, und damit über Internet und dgl., übertragen.

Die Erfindung wird nachfolgend anhand von in der Zeichnung dargestellten bevorzugten Ausführungsbeispielen, auf die sie jedoch nicht beschränkt sein soll, noch weiter erläutert.

Im Einzelnen zeigen in der Zeichnung:
Fig. 1 schematisch, teilweise in einer Art Ablaufdiagramm, eine Einrichtung bzw. ein Verfahren zur Zuordnung der Position eines mobilen Geräts in einem Verkaufsraum zu in dem Verkaufsraum befindlichen Waren;
Fig. 2 schematisch, in der Art eines Blockschaltbildes, den Aufbau eines mobilen Geräts, soweit er für die vorliegende Technik zur Zuordnung der Position des Geräts zu Waren von Interesse ist;
Fig. 3 schematisch eine Technik der Positionsbestimmung für ein mobiles Gerät mittels eines Trilaterationsverfahrens;
Fig. 4 ein ähnliches Schema für die Bestimmung der Position eines mobilen Geräts, nun mittels Triangulation;
Fig. 5 ein beispielhaftes Ablaufdiagramm zur Erfassung von Warenpositionen;
Fig. 6 ein gegenüber Fig. 5 modifiziertes Verfahren zur Erfassung von Warenpositionen in einem schematischen Ablaufdiagramm;
Fig. 7 in einem weiteren Ablaufdiagramm eine Möglichkeit zu Erfassung der Position einer Person in einem Verkaufsraum anhand des persönlichen mobilen Geräts; und
Fig. 8 ein Ablaufdiagramm zur Veranschaulichung der Vorgangsweise bei der Feststellung von zu einem Mobilgerät räumlich nahen Waren.

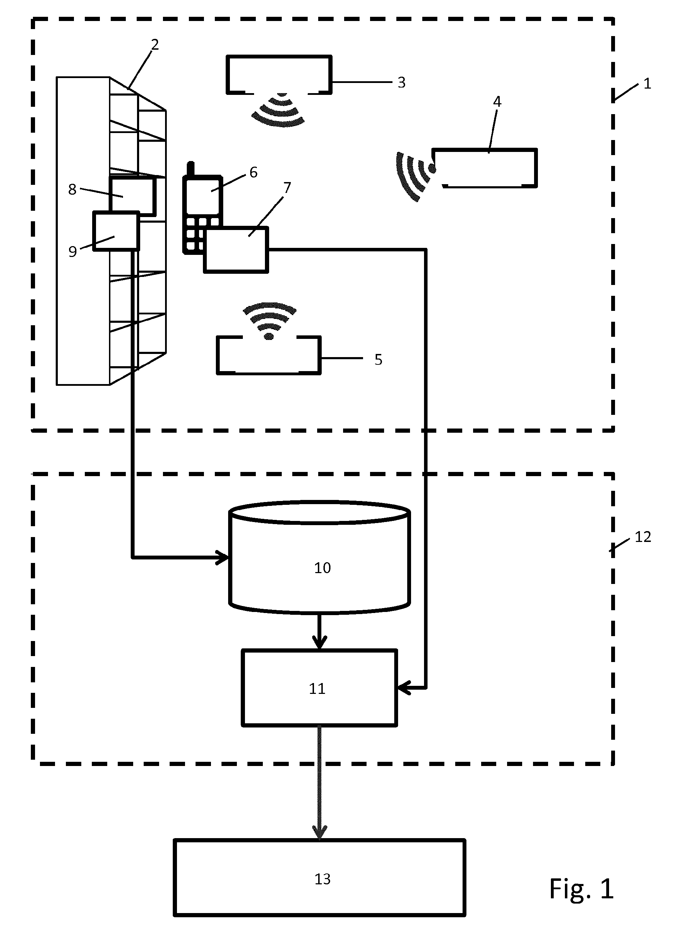

In Fig. 1 ist schematisch ein Verkaufsraum 1 mit einem Regal 2 gezeigt, in dessen Fächern Waren 8 schematisch angedeutet sind. Das Regal 2 steht symbolisch für mehrere Regale, wie sie üblicherweise in einem Verkaufsraum 1 enthalten sind.

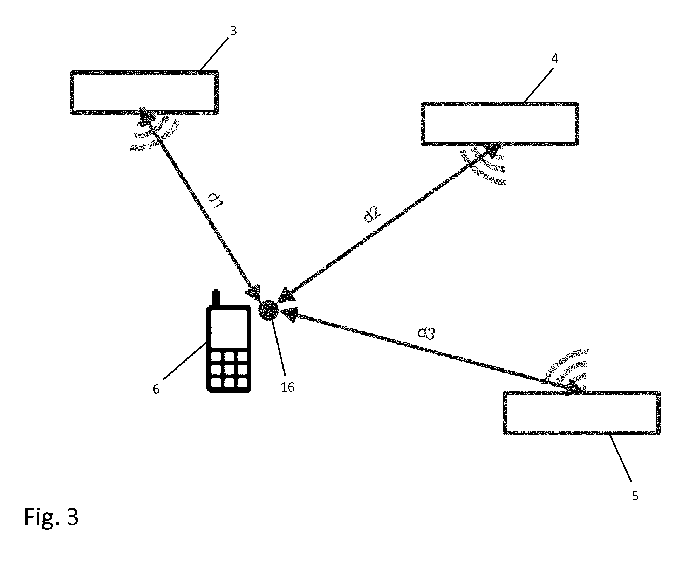

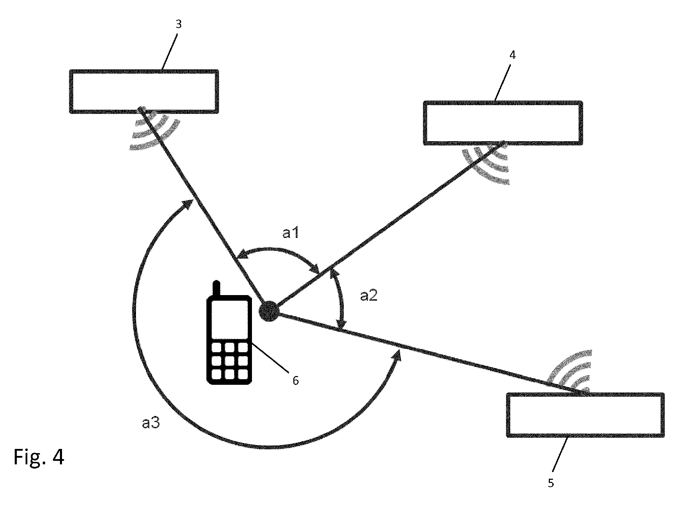

Schematisch sind weiters im Verkaufsraum 1 drei Funksender 3, 4, 5 gezeigt, deren Funksignale zur Positions-Erfassung eines mobilen Geräts 6 verwendet werden, wie dies nachfolgend anhand der Fig. 3 und 4 noch näher erläutert werden wird. Mit einem Block 7 ist in Fig. 1 aber zwecks Erläuterung bereits allgemein die Gerätepositions-Erfassung angedeutet.

Bei den Funksendern 3, 4 und 5 handelt es sich beispielsweise um an sich bekannte iBeacons der Firma Apple Inc., also um Funksender mit relativ geringer Reichweite, die aber zur Positionserfassung in einem Verkaufsraum 1 ausreicht.

Ganz allgemein ist in Fig. 1 mit einem Block 9 eine Warenpositionserfassung angedeutet, wobei aber genaugenommen die Position des mobilen Geräts 6 (nachfolgend auch kurz als "Mobilgerät" bezeichnet), das im Bereich der Warenposition gehalten wird, mithilfe der Funksender 3, 4 und 5 festgestellt wird. Die ermittelte Position wird gemäß dem Block 9 in Fig. 1 in der Folge an eine Warenpositionsdatenbank 10 übermittelt; diese Warenpositionsdatenbank 10 kann die verschiedensten auf Waren bezogenen Daten enthalten, und sie enthält je nach Bedarf insbesondere Positionscodes anhand von Funksender-Daten, Waren-Identifikationen, Wareninformationen sowie gegebenenfalls weitere Daten betreffend die Waren, wie etwa Anlieferungsdatum, Herstellerdaten und dgl. mehr.

Gemäß Block 11 in Fig. 1 wird die Personenposition (indirekt anhand des Positionscodes des Mobilgerätes 6 der Person), die bei 7 erfasst wurde, mit in der Warenpositionsdatenbank 10 gespeicherten Warenpositionen verglichen, um so die der Personenposition nahen Waren 8 im Regal 2 herauszufinden.

Die Warendatenbank 10 sowie die Vergleichsvorrichtung 11 sind Teil eines Serversystems 12, das in einem entfernten Gebäude vorliegen kann, wobei entsprechende Verbindungen, z.B. über Internet, über Funk etc. möglich sind.

Von diesem Serversystem 12 bzw. der Vergleichsvorrichtung 11 werden sodann bevorzugt Informationen an ein anderes EDV-System 13 gesendet, wie z.B. an einen Ad-Server, an ein CRM-System usw., von wo aus in der Folge auf Basis der übermittelten Wareninformation in Verbindung mit der ID des mobilen Geräts 6 Werbeinformationen an das mobile Gerät 6 bzw. den Nutzer des Mobilgerätes 6 gesendet werden können, was jedoch in Fig. 1 nicht weiter veranschaulicht ist.

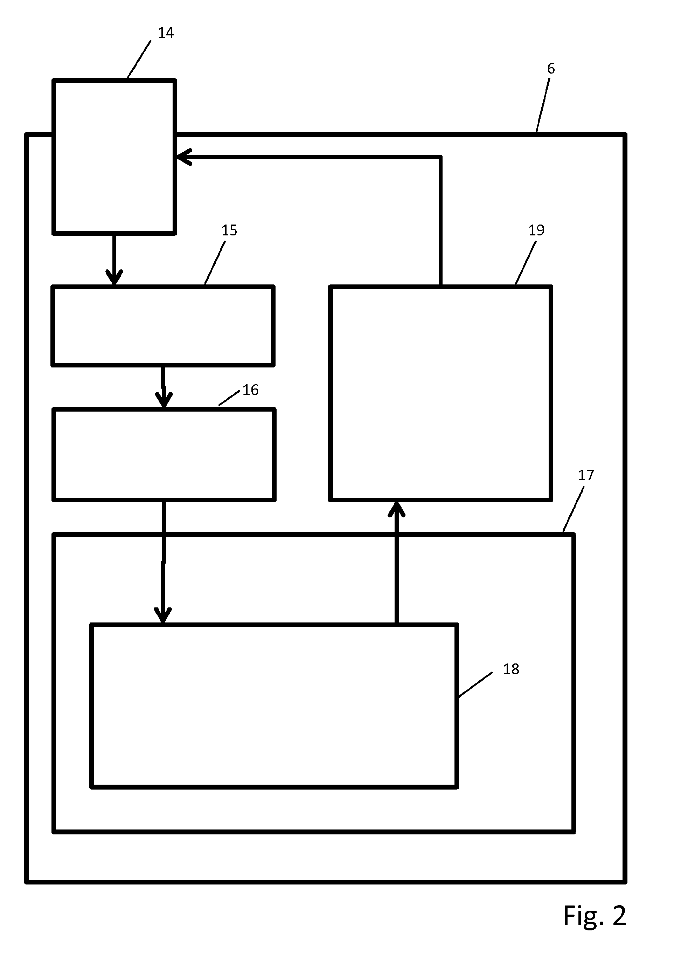

Das mobile Gerät 6 ist mit einem eigenen Softwaremodul (vgl. Block 18 in Fig. 2) ausgestattet, das u.a. die oben erwähnte Positionserfassung ermöglicht. Ein im mobilen Gerät 6 vorhandener, nicht näher veranschaulichter Prozessor bildet somit mit diesem Softwaremodul Rechenmittel, um auf Basis der von den Funksendern 3, 4, 5 ausgesendeten Funksignalen die Position des Mobilgeräts 6 relativ zu den Funksendern 3, 4, 5 und damit auch relativ zum jeweiligen Regal 2 bzw. den darin vorgesehenen Warenpositionen (Regalpositionen) zu berechnen.

In Fig. 2 sind in einer Art Blockschaltbild einzelne Module eines derartigen Mobilgeräts 6 veranschaulicht, soweit sie für die vorliegende Technik von Interesse sind.

Über eine Antenne 14 empfängt eine Empfangseinheit 15 Funksignale, die in einer Filtereinheit 16 bearbeitet werden, d.h. es wird dort insbesondere auch eine Filterung der Funksignale von standortbestimmenden Funksendern - z.B. 3, 4, 5 - durchgeführt und die Information über die empfangenen Funksender für weiterverarbeitende Software in einem Anwendersoftware-Bereich 17 zur Verfügung gestellt.

Im Anwendersoftware-Bereich 17 im mobilen Gerät 6 ist ein Softwaremodul 18 zur Berechnung der Position des mobilen Geräts 6 sowie weiters zum Versenden von Positionsdaten zur Warenpositionsdatenbank 10 (siehe Fig. 1) enthalten. Mit diesem Softwaremodul 18 ist ein Kommunikationsmodul 19 verbunden, mit dem eine Kommunikation beispielsweise über das Internet per Mobilfunk unter Nutzung der Antenne 14 durchgeführt werden kann. Den in Fig. 1 dargestellten Funksendern 3, 4 und 5 (es können auch mehr als drei Funksender vorgesehen sein) sind eindeutige Identifikationscodes zugeordnet, über die die betreffende relative Position des mobilen Geräts 6 zu den Funksendern 3, 4, 5 eindeutig festgestellt bzw. aufgefunden werden kann.

Im Einzelnen wird beim Empfang der von den Funksendern 3, 4, 5 ausgesandten Funksignale durch das Softwaremodul 18 im (jeweiligen) mobilen Gerät 6 der Abstand d1, d2, d3 (siehe Fig. 3) dieses mobilen Geräts 6 von jedem der Funksender 3, 4, 5 festgestellt. Diese zumindest ungefähre Abstandsermittlung kann z.B. auf der Basis der Stärke des Funksignals erfolgen, welche üblicherweise in Kategorien klassifiziert sein kann.

Beim Empfang der von den Funksendern 3, 4, 5 ausgesandten Funksignale werden beispielsweise folgende Daten im mobilen Gerät 6 abgespeichert:
- die eindeutige Identifikation der Funksender 3, 4 bzw. 5
- die Entfernungen d1, d2 und d3 in einer geeigneten Maß- oder Klassifizierungseinheit für die betreffenden Funksender 3, 4 bzw. 5;
wobei diese Daten vorzugsweise nicht nur für die Funksender 3, 4 und 5, sondern für jedes Funksignal, das empfangen werden kann, erfasst werden.

Anhand der Funksender-Identifikationen der empfangenen Funksignale kann in der Warenpositionsdatenbank 10 (siehe Fig. 1) eine zugehörige Menge von gespeicherten Warenpositionsdaten aufgefunden werden. Durch Vergleich der Funksender-Identifikationen sowie der Entfernungsdaten bzw. Entfernungsklassifizierung wird bei Übereinstimmung aller Werte eine Übereinstimmung der relativen Position des mobilen Geräts 6 zu gespeicherten Warenpositionen bzw. den damit verbundenen Waren festgestellt.

Gemäß Fig. 3 kann beispielsweise für jeden Funksender 3, 4 und 5 auf diese Weise der Abstand oder die Distanz d1, d2 sowie d3 zur Position 16 des mobilen Geräts 6 festgestellt werden, wodurch in einem an sich bekannten Trilaterationsverfahren auch die Position 16 des mobilen Geräts 6 ermittelt werden kann.

Alternativ zu diesem Trilaterationsverfahren gemäß Fig. 3 ist auch eine Positionsbestimmung über ein Triangulationsverfahren wie in Fig. 4 schematisch veranschaulicht möglich. Dabei werden, soweit die Technologie der Funksender 3, 4, 5 und des mobilen Geräts 6 die Feststellung von Winkeln a1, a2 und a3 der Signale von jeweils zwei Funksendern 3/4, 4/5 sowie 5/3 ermöglicht, folgende Daten bzw. Daten gespeichert:
- Identifikationscode des Funksenders 3
- Identifikationscode des Funksenders 4
- Identifikationscode des Funksenders 5
- Winkel a1 zwischen Funksender 3 und Funksender 4
- Winkel a3 zwischen Funksender 3 und Funksender 5
- Winkel a2 zwischen Funksender 4 und Funksender 5

Beim Positionsvergleich kann eine Menge an in der Positionsdatenbank 10 gespeicherten Positionsdaten anhand des Identifikationscodes eines der Funksender 3, 4 bzw. 5 gefunden werden. Bei Übereinstimmung der Identifikationscodes aller Funksender 3, 4 und 5 und der Winkel a1, a2, a3 kann die Positionsübereinstimmung festgestellt werden. Eine Toleranz in der Berechnung wird erreicht, indem die Winkel bloß zu einem definierten Prozentsatz übereinstimmen müssen bzw. nur ein bestimmter Prozentsatz der Funksender 3, 4, 5 mit ihren Winkeln übereinstimmen müssen.

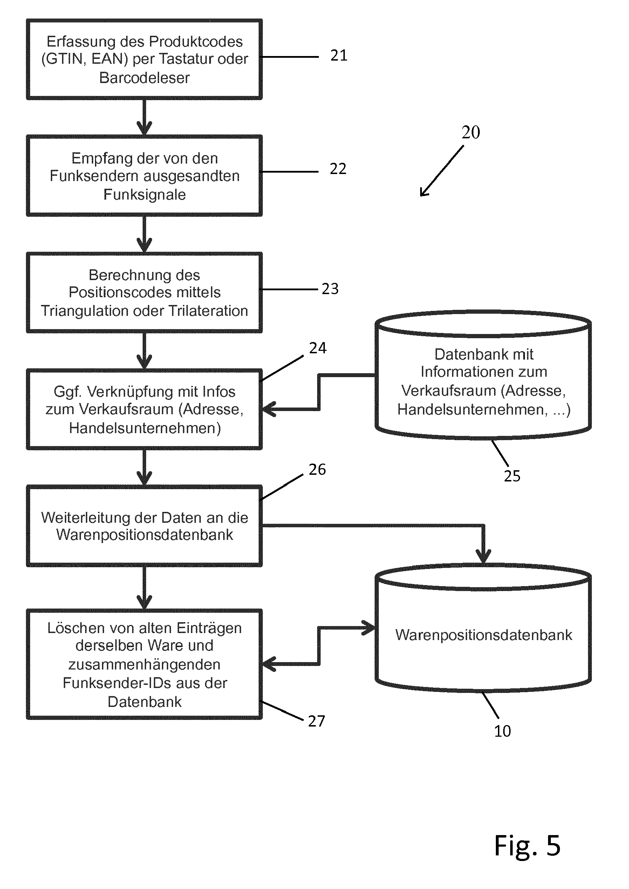

In Fig. 5 ist ein möglicher Ablauf 20 für die Erfassung der Position einer Ware in einem Ablaufdiagramm schematisch veranschaulicht.

Vorauszuschicken ist dabei, dass generell für die Erfassung einer Warenposition folgende Schritte erforderlich sind:
- Der Positionscode der Ware wird in Relation zu den im Verkaufsraum 1 montierten Funksendern 3, 4, 5 berechnet
- Der Positionscode wird gemeinsam mit Datum und einer eindeutigen Warenidentifikation (z.B. EAN- oder GTIN-Code) an die zentrale Warenpositionsdatenbank 10 in einem zentralen Serversystem 12 übermittelt. Die Übermittlung der Daten erfolgt bevorzugt über das Internet, per Kabelanbindung oder Funk (WLAN, Mobilfunk), wobei die Übermittlung unmittelbar bei der Erfassung der Daten oder aber zeitversetzt erfolgen kann.

- Optional können noch weitere Daten betreffend die Ware sowie deren Position an die zentrale Warenpositionsdatenbank 10 übermittelt werden, z.B.
   - Handelsunternehmen, zu dem der Verkaufsraum 1 gehört
   - Adresse oder Geokoordinaten des Verkaufsraums 1
   - Hersteller der Ware
   - Produktgruppe.

Die Erfassung der Warenposition kann z.B. auf die folgenden Arten erfolgen:
- Mit dem mobilen Gerät 6 mit Funksender-Empfangsfunktion wird der Produktcode bzw. der Barcode der Ware an deren Position erfasst, und es werden die oben genannten Schritte durchgeführt.
- Mit dem mobilen Gerät 6 erfolgt die Zuordnung von möglichen Verkaufspositionen (z.B. Position eines Preisschildes oder eines Regalfachs im Verkaufsraum 1) zu den Waren 8. Diese Positionen, also die möglichen Positionen von Waren 8 im Verkaufsraum 1, werden vorab in der Warenpositionsatenbank 10 oder einer anderen Datenbank mit dem gemäß dem oben angegebenen Verfahren berechneten Positionscode gespeichert. Somit werden am mobilen Gerät 6 die Waren den möglichen Positionen im Verkaufsraum 1 über eine Software zugeordnet. Alternativ kann diese Zuordnung auch über eine Software erfolgen, die nicht am mobilen Gerät 6 verwendet wird. Durch diese Zuordnung wird jedenfalls die Warenposition und somit der Positionscode bestimmt und entsprechend dem oben beschriebenen Ablauf gemeinsam mit den Wareninformationen an die zentrale Warenpositionsdatenbank 10 übermittelt.

Im konkreten Ablauf gemäß Fig. 5 ist im Schritt 21 die Erfassung des Produktcodes am Gerät 6, z.B. durch Eingabe oder aber mithilfe eines Barcodelesers veranschaulicht. Gemäß Schritt 22 werden die von den Funksendern 3, 4 und 5 ausgesandten Funksignale empfangen, wonach gemäß Schritt 23 der Positionscode für das mobile Gerät 6 mittels Triangulation (vgl. Fig. 4) oder Trilateration (vgl. Fig. 3) berechnet wird. Gemäß Schritt 24 in Fig. 5 können optional die Produkt- bzw. Positionsdaten mit Informationen zum Verkaufsraum 1 (z.B. Adresse, Handelsunternehmen) verknüpft werden, wobei diese Informationen einer Datenbank 25 entnommen werden.

Gemäß Schritt 26 in Fig. 5 werden sodann die gewonnenen Daten an die Warenpositionsdatenbank 10 weitergeleitet, und schließlich werden gemäß Schritt 27 alte Einträge betreffend dieselbe Ware sowie die damit zusammenhängenden Funksender-Identifikationen aus der Datenbank 10 gelöscht.

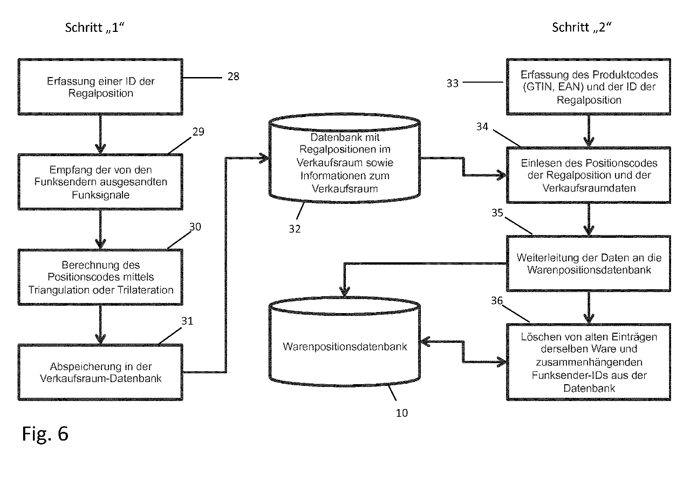

Gemäß einer Alternative betreffend die Erfassung von Warenpositionen, vgl. Fig. 6, wird in einem Schritt "1" zunächst eine eindeutige Identifikation (ID) einer Regalposition - gemäß Feld 28 - erfasst, und gemäß Feld 29 werden die von den Funksendern 3, 4, 5 ausgesandten Funksignale vom mobilen Gerät 6 empfangen. Danach erfolgt eine Berechnung des Positionscodes für das mobile Gerät 6 mittels Triangulation (vgl. Fig. 4) oder Trilateration (vgl. Fig. 3), Feld 30 in Fig. 6, und der ermittelte Positionscode wird verbunden mit der ID der Regalposition gemäß Feld 31 in einer Datenbank 32 abgespeichert.

In einem Schritt "2" gemäß Fig. 6 werden, gemäß Feld 33, der Produktcode (z.B. GTIN oder EAN) sowie die ID der Regalposition erfasst, wonach über die ID der Regalposition der Positionscode der Regalposition und die Verkaufsraumdaten gemäß Feld 34 aus der Datenbank 32 ausgelesen werden. Danach werden bei 35 die Daten, d.h. die Warendaten (Produktcode, Positionscode, ...), an die Warenpositionsdatenbank 10 weitergeleitet, und gemäß Feld 36 werden alte Einträge betreffend dieselbe Ware und die damit zusammenhängenden Positionscodes aus der Datenbank 10 gelöscht.

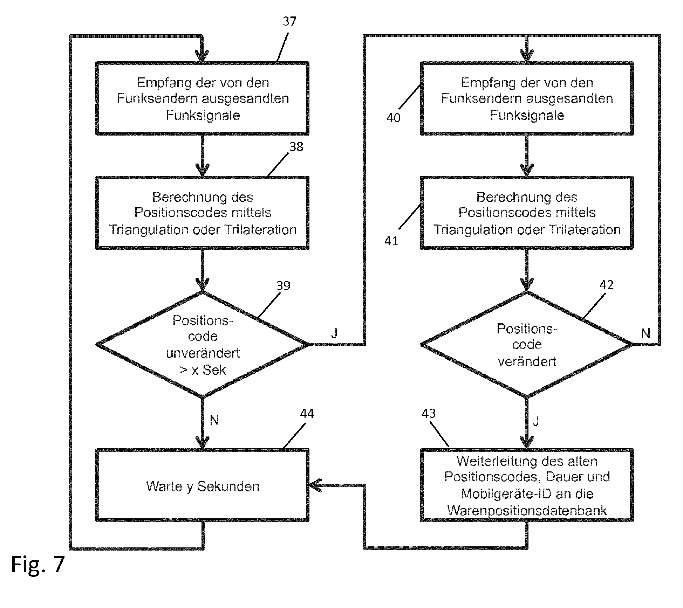

In Fig. 7 ist in einem Schema die Erfassung der Position der Person (bzw. genauer des von der Person verwendeten persönlichen mobilen Gerätes 6) veranschaulicht. Dabei werden im Schritt 37 die von den Funksendern 3, 4, 5 ausgesandten Funksignale empfangen, und auf Basis dieser Funksignale wird im Schritt 38 der Positionscode für das mobile Geräts 6 mittels Triangulation (Fig. 4) oder Trilateration (Fig. 3) berechnet. Es wird somit die Position der jeweiligen Person indirekt über die Position des mobilen Geräts 6 festgestellt, und diese Position wird mit den in der Warenpositionsdatenbank 10 gespeicherten Positionen von Waren verglichen.

Dabei sind mobile Geräte 6 mit einer gewissen Intelligenz zu verwenden, wie z.B. Smartphones oder Tablets. Bevorzugt wird ein Softwaremodul 18 (siehe Fig. 2) verwendet, das in unterschiedliche mobile Anwendungen und Websites eingebunden werden kann. Ist eine dieser Anwendungen oder Websites am mobilen Gerät 6 aktiv bzw. auch nur im Hintergrund aktiv, so wartet das Softwaremodul 18 auf Informationen über empfangbare Funksender 3, 4, 5. Diese Information erhält das Softwaremodul 18 von den Sensoren bzw. Empfängern des mobilen Gerätes 6.

Sobald die Funksignale von zumindest zwei Funksendern 3, 4, 5 empfangen werden können, beginnt das Softwaremodul 18, diese Information zu verarbeiten. Dabei berechnet das Softwaremodul 18 nach dem oben beschriebenen Verfahren den Positionscode und speichert diesen kurzzeitig mit Datum und Uhrzeit auf dem mobilen Gerät 6. Diese Berechnung erfolgt jeweils neu in einem definierbaren Intervall, z.B. ein Mal pro Sekunde. Ändert sich der Positionscode innerhalb eines definierbaren Zeitraumes (z.B. 10 Sekunden) nur unwesentlich (indem z.B. festgestellt wird, dass die Position auf z.B. etwa ein Meter Radius gleich bleibt), so wird die Übertragung der Personenposition zum Serversystem 12 (siehe Fig. 1) initiiert. Die Übertragung findet erst statt, wenn sich der Positionscode über der oben definierten Toleranzgrenze ändert, damit die Dauer des Verweilens an der Position durch das Gerät 6 feststellbar ist. Ist dies der Fall, so wird die Personenposition an das Serversystem 12 unter Nutzung z.B. des Internets, im allgemeinen über das Mobilfunknetz, übermittelt. Dabei werden zumindest die folgenden Daten übertragen:
- Datum, Uhrzeit
- Positionscode
- Dauer des Verweilens an der Position
- ID des mobilen Gerätes 6

Ist die Übertragung der Daten nicht möglich, da zum Beispiel keine Verbindung zum Internet vorhanden ist, so wird diese Personenpositions-Information am mobilen Gerät 6 gespeichert und von dem Softwaremodul 18 übertragen, sobald wieder eine Verbindung zum Serversystem 12 möglich ist.

Dieser Ablauf ist im Einzelnen in Fig. 7 veranschaulicht, wobei nach dem Empfang der Funksignale der Funksender 3, 4, 5 (im Schritt 37) der Positionscode mittels Trilateration oder Triangulation (im Schritt 38) berechnet wird. Gemäß Überprüfungsfeld 39 wird dann überprüft, inwieweit der Positionscode länger als im vorgegebenem Zeitraum, z.B. x Sekunden (z.B. 10 Sekunden) unverändert bleibt, wobei dann, wenn ein unveränderter Positionscode festgestellt wird, gemäß Feld 40 neuerlich die von den Funksendern 3, 4, 5 ausgesandten Funksignale empfangen werden, woraus nach Erhalt der Positionscode mittels Triangulation oder Trilateration in Feld 41 berechnet wird. Im Überprüfungsfeld 42 wird sodann überprüft, ob sich der Positionscode über die Toleranzgrenze hinaus geändert hat, und wenn nein, wird zum Eingang des Felds 40 zurückgekehrt. Andernfalls werden der alte Positionscode, die Dauer des Verweilens an der Position und die Mobilgeräte-ID an die Warenpositionsdatenbank 10 weitergeleitet, Schritt 43, und es wird gemäß Feld 44 eine vorgegebene Zeit x (z.B. 1 Sekunde) abgewartet, wonach zum Eingangsschritt 37 übergegangen wird. Zu diesem Wartefeld 44 wird auch übergegangen, wenn im Abfragefeld 39 eine Änderung des Positionscodes vor Ablauf des vorgegebenen Zeitintervalls festgestellt wird.

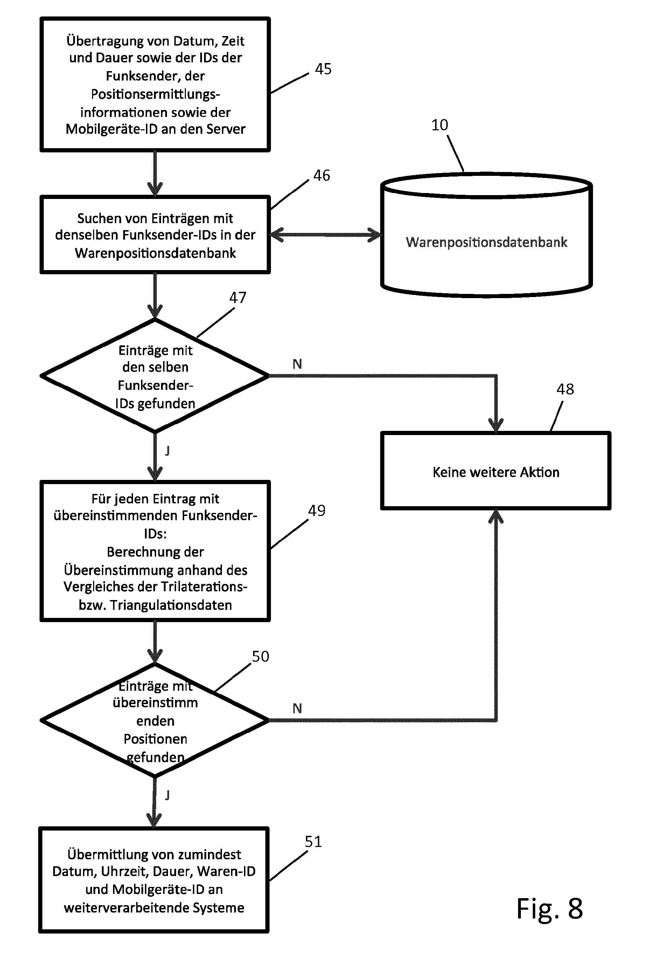

In Fig. 8 ist schließlich schematisch veranschaulicht, wie in einer Vergleichsvorrichtung 11 am Serversystem 12 (Fig. 1) mithilfe des mobilen Geräts 6 räumlich nahe Waren festgestellt werden können.

Gemäß Fig. 8 werden dabei im Einzelnen, wie in Feld 45 veranschaulicht, Datum, Zeit und Dauer sowie die IDs der Funksender 3, 4, 5 sowie weiters Positionsermittlungsinformationen (für Trilaterations- oder Triangulationsverfahren) und die Mobilgeräte-ID an den Server 12 übertragen. Gemäß Feld 46 werden Einträge mit denselben Funksender-IDs in der Warenpositionsdatenbank 10 gesucht, und gemäß Feld 47 wird abgefragt, ob Einträge mit den selben Funksender-IDs gefunden wurden. Wenn nein, sind gemäß Feld 48 keine weiteren Aktionen erforderlich.

Im positiven Fall jedoch wird gemäß Feld 49 für jeden Eintrag mit übereinstimmenden Funksender-IDs die Übereinstimmung anhand des Vergleichs der Trilaterations- bzw. Triangulations-Daten unter Berücksichtigung einer definierbaren Toleranzgrenze berechnet, und im Abfragefeld 50 wird abgefragt, ob Einträge mit übereinstimmenden Positionen gefunden wurden. Wenn nein, ist wiederum keine weitere Aktion mehr erforderlich (Feld 48). Wenn Einträge mit übereinstimmenden Positionen jedoch gefunden wurden, so wird abschließend gemäß Feld 51 eine Übermittlung von Daten, wie insbesondere Kalenderdatum, Uhrzeit, Dauer, Waren-ID und Mobilgeräte-ID, an weiter verarbeitende Systeme veranlasst. Dabei kann es sich um das Rechnersystem 13 gemäß Fig. 1 handeln.

Wie dargelegt werden bei der vorliegenden Vorgangsweise mobile Geräte 6 aufgrund der Feststellung der relativen Position des mobilen Geräts 6 zu Funksendern 3, 4, 5, die eindeutige Funksignale ausstrahlen, einer Ware in einem Regal 2 zugeordnet, wobei auch die jeweilige räumlich nahe Ware durch Vergleich der relativen Position des mobilen Geräts 6 mit der jeweiligen in der Warenpositionsdatenbank 10 gespeicherten relativen Position der Ware festgestellt wird. Dabei werden bevorzugt auch die Positionen der Waren 8 im Regal 2 im Verkaufsraum 1 auf Basis der eindeutigen Funksignale in Relation zu den in Verkaufsraum 1 fest angebrachten Funksendern 3, 4 und 5 berechnet. Die Warenpositionen werden mit zusätzlichen Informationen über die Waren 8, wie etwa EAN-Code, GTIN-Code, Daten betreffend Hersteller sowie das Unternehmen, zu dem der Verkaufsraum 1 gehört, in der zentralen Warenpositionsdatenbank 10 gespeichert. Die Position der jeweiligen Person, die den Verkaufsraum 1 besucht, wird über ein auf den jeweiligen mobilen Gerät 6 der Person laufendes Softwaremodul 18 relativ zu den Funksendern 3, 4, 5 ermittelt und an die Vergleichsvorrichtung 11 im Serversystem 12 übertragen. Dort wird berechnet, welche Waren sich aufgrund der Positionscodes der Waren (anhand der in der Warenpositionsdatenbank 10 gespeicherten Daten) in der Nähe der Person, genauer des mobilen Geräts 6, im Verkaufsraum 1 befinden. Diese Daten betreffend Ware 8 und mobiles Gerät 6 werden an andere EDV-Systeme, z.B. 13 in Fig. 1, für eine Weiterverarbeitung übertragen, wie insbesondere zwecks Zustellung von personalisierter Werbung betreffend derartige Waren an das mobile Gerät 6.

## Patentansprüche

1. Einrichtung zur Zuordnung der Position eines mobilen Geräts (6) in einem Verkaufsraum (1) zu im Verkaufsraum befindlichen Waren (8), **gekennzeichnet durch** eine Geräte-Positionserfassungsvorrichtung zur Feststellung der Position des mobilen Geräts (6) im Verkaufsraum (1) und **durch** eine Vergleichsvorrichtung (11) zum Vergleich der festgestellten Position des mobilen Geräts mit Waren-Positionen im Verkaufsraum (1).

2. Einrichtung nach Anspruch 1, **dadurch gekennzeichnet, dass** die Geräte-Positionserfassungsvorrichtung mehrere an festen Positionen im Verkaufsraum (1) befindliche Funksignal-Sender (3,4,5) zum Ausstrahlen von eindeutigen Funksignalen, die von dem im Verkaufsraum (1) vorhandenen mobilen Gerät (6) empfangen werden, und Rechenmittel zur geometrischen Bestimmung, z.B. mittels Triangulationsalgorithmen, der Position des mobilen Geräts (6) relativ zu den Funksignal-Sendern (3,4,5) auf Basis der empfangenen Funksignale umfasst.

3. Einrichtung nach Anspruch 1 oder 2, **gekennzeichnet durch** eine Waren-Positionserfassungsvorrichtung mit einem mobilen Gerät (6), das eine Funksender-Empfangsfunktion sowie Rechenmittel (18) aufweist, und mit mehreren Funksignal-Sendern an festen Positionen im Verkaufsraum (1), wobei die Rechenmittel (18) eingerichtet sind, die Position des an einen Waren-Platz gehaltenen mobilen Geräts (6) auf Basis von empfangenen Funksignalen, z.B. mittels Triangulationsalgorithmen, zu bestimmen.

4. Einrichtung nach Anspruch 2 oder 3, **dadurch gekennzeichnet, dass** die Rechenmittel (18) für die Bestimmung der Position des mobilen Geräts in diesem mobilen Gerät (6) selbst enthalten sind.

5. Einrichtung nach einem der Ansprüche 1 bis 4, **gekennzeichnet durch** eine Speichervorrichtung (10) für die Positionen der Waren im Verkaufsraum, wobei die Vergleichsvorrichtung (11) mit dieser Warenpositions-Speichervorrichtung (10) verbunden ist.

6. Einrichtung nach Anspruch 5, **dadurch gekennzeichnet, dass** die Warenpositions-Speichervorrichtung (10) und die Vergleichsvorrichtung (11) durch ein Serversystem (12) realisiert sind.

7. Einrichtung nach einem der Ansprüche 4 bis 6, **dadurch gekennzeichnet, dass** die Warenpositions-Speichervorrichtung (10) zusätzlich zur Speicherung von Waren-bezogenen Daten wie z.B. von Warenidentifikationscodes, des Datums der Einordnung der Waren, einer Produktgruppe, von Herstellern, Preisen und dergl., eingerichtet ist.

8. Einrichtung nach einem der Ansprüche 6 oder 7 **dadurch gekennzeichnet, dass** das Serversystem (12) mit einem Mobilfunk-Empfänger zum Empfangen von Mobilfunksignalen der mobilen Geräte (6) verbunden ist.

9. Einrichtung nach einem der Ansprüche 6 bis 8, **gekennzeichnet durch** zumindest ein weiteres EDV-System (13) zum Empfang von Informationen, wie Mobilgeräte-Identifikation, Wareninformation usw., vom Serversystem (12) und zu deren Weiterverarbeitung, z.B. für die Zusendung von personalisierter Werbung.

10. Einrichtung nach einem der Ansprüche 2 bis 9, **dadurch gekennzeichnet, dass** die Funksignal-Sender (3,4,5) durch iBeacons gebildet sind.

11. Verfahren zur Zuordnung der Position eines mobilen Geräts (6) in einem Verkaufsraum (1) zu im Verkaufsraum befindlichen Waren (8), **dadurch gekennzeichnet, dass** die Position des mobilen Geräts (6) im Verkaufsraum (1) auf der Basis von eindeutigen Funksignalen ermittelt wird, die von im Verkaufsraum befindlichen Funksignal-Sendern (3,4,5), z.B. iBeacons, ausgesendet werden, und dass die so ermittelte Position des mobilen Geräts (6) mit Positionen von im Verkaufsraum (1) befindlichen Waren (8) verglichen wird.

12. Verfahren nach Anspruch 11, **dadurch gekennzeichnet, dass** die ermittelte Position des mobilen Geräts (6) erst nach einem vorgegeben Zeitraum, z.B. 10 Sekunden, über den sich diese Position zumindest nicht wesentlich geändert hat, mit den Waren-Positionen verglichen wird.

13. Verfahren nach Anspruch 11 oder 12, **dadurch gekennzeichnet, dass** die Positionen der Waren (8) im Verkaufsraum (1) vorab in einer Warenpostions-Speichervorrichtung (10) gespeichert werden.

14. Verfahren nach Anspruch 13, **dadurch gekennzeichnet, dass** die Positionen der Waren (8) über eine Zuordnung der Waren (8) zu Regalpositionen festgelegt werden, wobei Positionscodes für die Regalpositionen vorab, z.B. mittels eines mobilen Geräts (6), erfasst und gespeichert werden.

15. Verfahren nach einem der Ansprüche 11 bis 14, **dadurch gekennzeichnet, dass** Identifikationscodes von Waren (8) in das mobile Gerät (6), z.B. über eine Tastatur oder einen Barcodeleser, eingegeben und mit der ermittelten Position des mobilen Geräts (6) verknüpft werden.

16. Verfahren nach einem der Ansprüche 11 bis 15, **dadurch gekennzeichnet, dass** die Position des mobilen Geräts (6) sofort nach ihrer Ermittlung an ein Serversystem (12) übermittelt wird, dem auch die Positionen der Waren (8) im Verkaufsraum (1), gegebenenfalls durch die Warenpositions-Speichervorrichtung (10), verfügbar sind.

17. Verfahren nach einem der Ansprüche 11 bis 15, **dadurch gekennzeichnet, dass** die Position des mobilen Geräts (6) nach ihrer Ermittlung vorübergehend im mobilen Gerät (6) gespeichert und zu einem späteren Zeitpunkt an ein Serversystem (12) übermittelt wird, dem auch die Positionen der Waren (8) im Verkaufsraum (1), gegebenenfalls durch die Warenpositions-Speichervorrichtung (10), verfügbar sind.

18. Verfahren nach Anspruch 16 oder 17, **dadurch gekennzeichnet, dass** die Position des mobilen Geräts (6) an das Serversystem (12) über Internet oder über ein Mobilfunknetz übertragen wird.
